# EUROPEAN PATENT APPLICATION

(11) **EP 1 562 136 A1**
(43) Date of publication of application: **10.08.2005**
(21) Application number: 05250593.0
(22) Date of filing: 03.02.2005
(51) Int. Cl.: G06K 9/00, G06F 3/033

(54) **Operation control apparatus, process control apparatus, operation control method**

(30) Priority: 05.02.2004 JP 2004029609
(71) Applicant: Pioneer Corporation, Tokyo 153-8654 (JP)
(72) Inventor: Yamamoto, Kentaro, c/0 Pioneer Corporation, Kawagoe-shi Saitama 350-8555 (JP)
(74) Representative: Haley, Stephen

(57) **Abstract**

When a processor (360) of an audio reproducer (100) obtains each of signals (Sou, Smi, and Shi) corresponding to three input operation being push-down operation, right-turn operation and left-turn operation from an input section (220) at the equipment control member (364), the processor (360) generates an operation control signal (Scs) for making equipment (310) work with a function corresponding to each input operation based on function setting information to output. When a fingerprint detecting section (230) detects a fingerprint, the fingerprint detecting section (230) generates a fingerprint signal (Syu) corresponding to this fingerprint to output. When the processor (360) obtains the fingerprint signal (Syu), the processor (360) generates function setting information in which a function corresponding to each input operation of the input section (220) is set to a function associated with the fingerprint, at an operation function setting member (363).

## Description

The present invention relates to an operation control apparatus, a process control apparatus, an operation control method and its program and a recording medium storing the program, in which a plurality of processes are executed.

Recently, a technology called biometrics authentication, which identifies an individual by utilizing biological characteristics such as fingerprints, a face, and a voice of an individual, has been known. The biometrics authentication utilizes the biological characteristics unique to an individual, so that the biometrics authentication has higher security than conventional authentication using a password or an IC (integrated circuit) card. And a display apparatus of a car navigation system utilizing the biometrics authentication has been disclosed (for example, refer to a document: Japanese Patent Laid-Open Publication No. 2000-309247, p.3, left column to p.4, right column).

The apparatus described in the document is provided with a fingerprint sensor for detecting fingerprints, a fingerprint registration section for storing fingerprints that have been registered beforehand, a fingerprint collating section for collating the fingerprints detected by the fingerprint sensor and the fingerprints being stored in the fingerprint registration section by comparing them, a controlling section that outputs control signals for controlling devices based on the collated result at the fingerprint collating section, and a monitor opening/closing section that makes a motor for opening and closing a monitor work by a signal from the controlling section.

And when it is determined that the fingerprint detected by the fingerprint sensor has been registered in the fingerprint registration section as, for example, the index finger at the fingerprint collating section, the controlling section sends a signal to the monitor opening/closing section, and makes the monitor open or close. When it is determined that the fingerprint detected by the fingerprint sensor has been registered as, for example, the middle finger, the controlling section sends a signal to a guide route searching section in the navigation system, and makes the guide route searching section start to guide a route to a user's house. Further, when it is determined that the fingerprint detected by the fingerprint sensor has been registered as, for example, the ring finger, the controlling section sends a signal to a searching section in the car navigation system, and makes the searching section start to execute a large variety of search for guiding surrounding places of the present position.

However, with the conventional structure of the apparatus described in the above-mentioned document, when the fingerprint sensor detects, for example, the fingerprint of the middle finger that has been registered in the fingerprint registration section, it can only make the car navigation system start route guide operation. Therefore, there is a problem that only one process corresponding to each detected finger can be executed, when a fingerprint of each finger having been registered in the fingerprint registration section is detected by the fingerprint sensor.

An object of the present invention is to provide an operation control apparatus, a process control apparatus, an operation control method and a program thereof, in which a plurality of processes is executed easily, and a recording medium storing the program.

According to an aspect of the present invention, an operation control apparatus includes: a biological characteristic signal output member that recognizes a biological characteristic of a human body to be utilized for an input operation and outputs a biological characteristic signal corresponding to the biological characteristic; and a process controller that controls a process executing member for executing various processes in accordance with the input operation, in which the process controller sets a process to be executed by the process executing member based on the biological characteristic signal and the input operation.

According to another aspect of the present invention, a process control apparatus includes: a process executing member that executes various processes in accordance with an input operation; and the above-described operation control apparatus that sets a process to be executed by the process executing member.

According to still another aspect of the present invention, an operation control method includes the steps of: recognizing a biological characteristic of a human body to be used in an input operation, and causing a biological characteristic signal corresponding to the biological characteristic to be output; controlling a process executing member that executes various processes corresponding to the input operation; and setting a process to be executed by the process executing member based on the biological characteristic signal and the input operation.

According to yet another aspect of the present invention, an operation control program makes a computer function as the above-described operation control apparatus.

According to further aspect of the present invention, an operation control program makes a computer execute the above-mentioned operation control method.

According to still further aspect of the present invention, a recording medium storing the above-described operation control program is stored by a computer in a readable manner.
Fig. 1 is a block diagram showing a schematic structure of an audio reproducer according to an embodiment of the present invention;
Fig. 2 is a perspective view showing a schematic structure of a grille according to the embodiment of the present invention;
Fig. 3 is a conceptual diagram showing a schematic table structure of data of fingerprint-based function information according to the embodiment of the present invention;
Fig. 4 is a conceptual diagram showing a schematic table structure of data of fingerprint registration information according to the embodiment of the present invention;
Fig. 5 is a conceptual diagram showing a schematic table structure of data of combination information according to the embodiment of the present invention;
Fig. 6 is a flowchart showing registration processes of fingerprint information and the combination information according to the embodiment of the present invention;
Fig. 7 is a flowchart showing a setting process of operable functions according to the embodiment of the present invention; and
Fig. 8 is a flowchart showing the registration processes of the fingerprint information and the combination information according to another embodiment of the present invention.

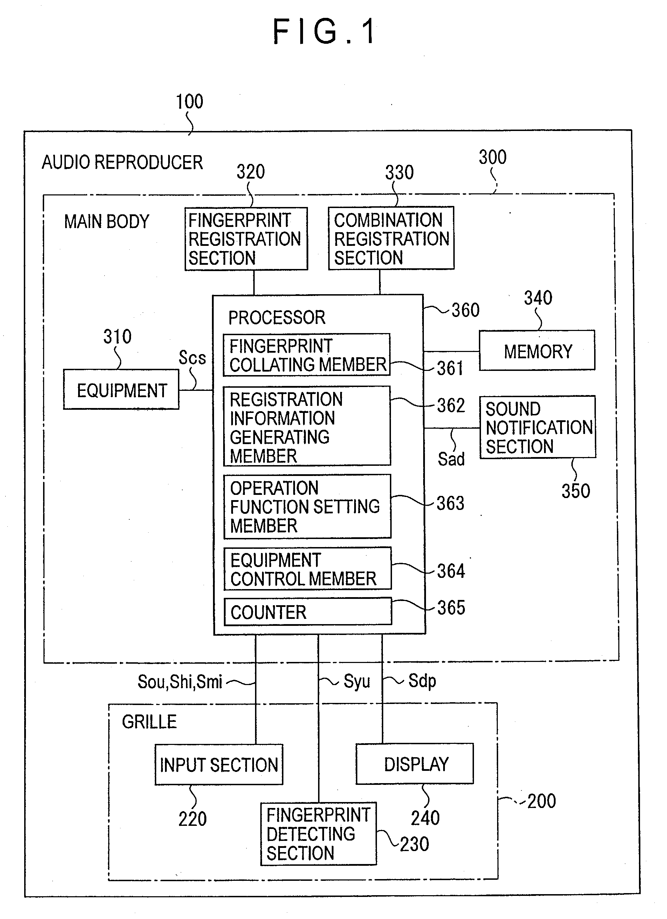

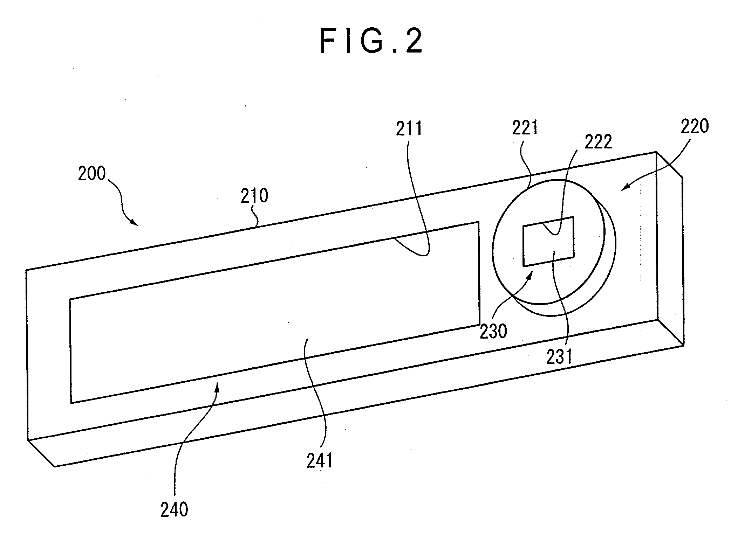

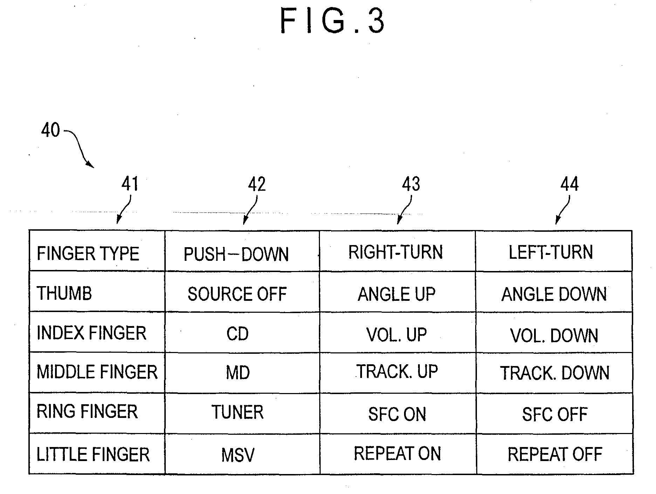

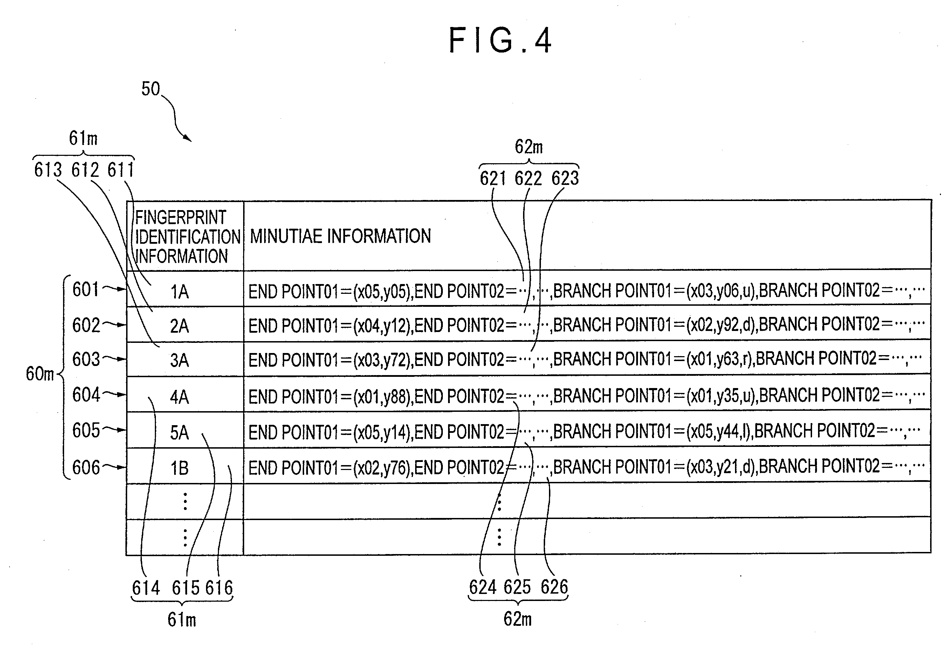

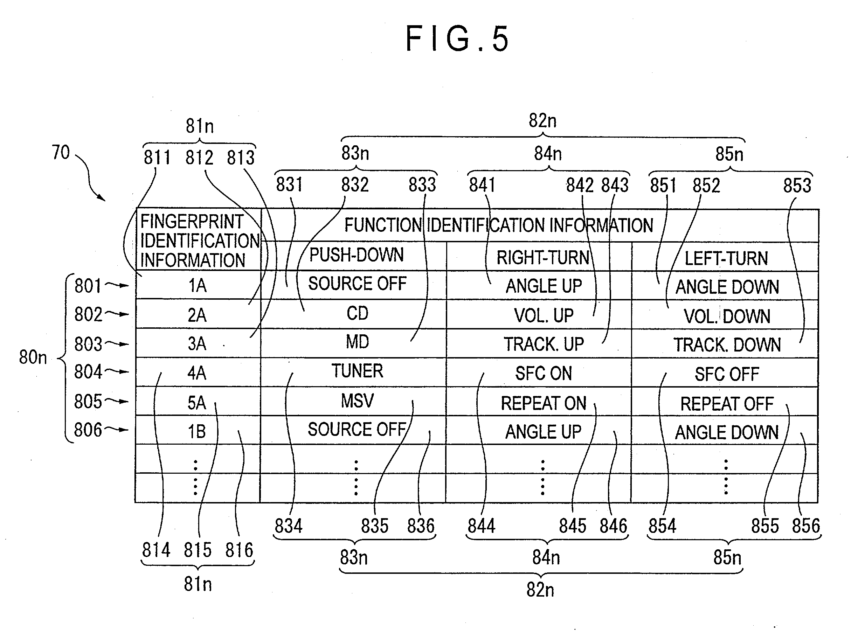

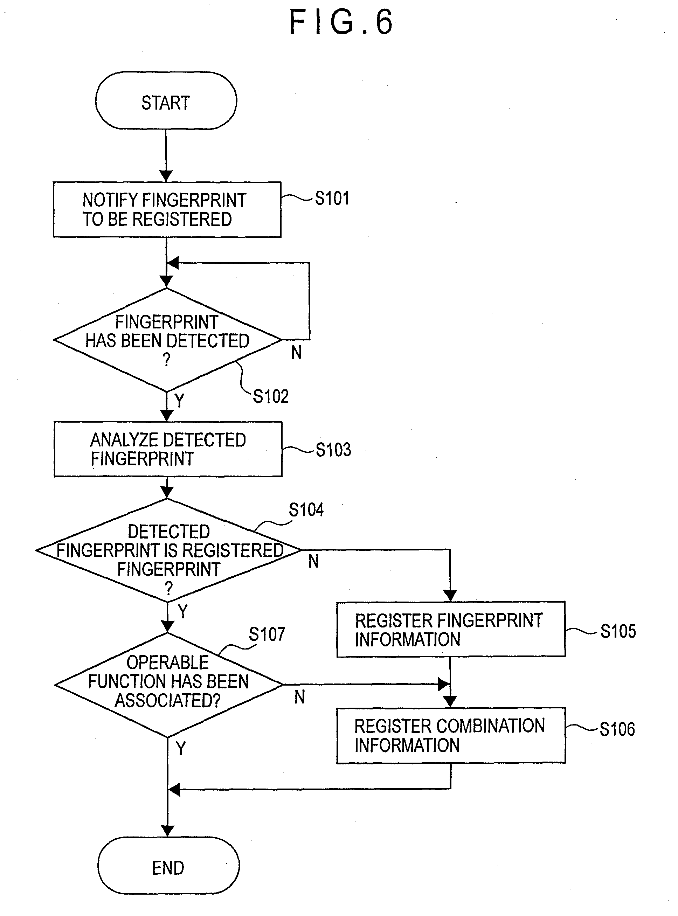

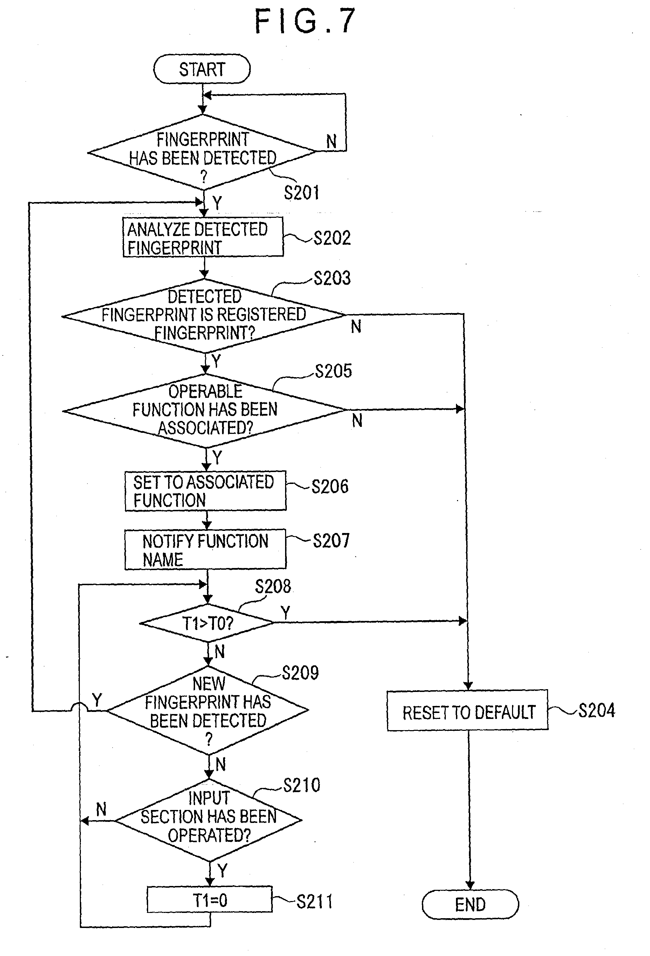

An embodiment of the present invention will be described below with reference to the attached drawings. An audio reproducer having an operation control apparatus and a process control apparatus of the present invention will be described as an example in the present embodiment. However, the present invention is not limited to the audio reproducer, and can be applied to any structure that executes a plurality of processes. Fig. 1 is a block diagram showing a schematic structure of an audio reproducer. Fig. 2 is a perspective view of a schematic structure of a grille. Fig. 3 is a conceptual diagram of a schematic table structure of data of fingerprint-based function information. Fig. 4 is a conceptual diagram of a schematic table structure of data of fingerprint registration information. Fig. 5 is a conceptual diagram of a schematic table structure of data of combination information. Fig. 6 is a flowchart showing registration processes of fingerprint information and the combination information. Fig. 7 is a flowchart showing a setting process of operable functions.

### [Structure of Audio Player]

In Fig. 1, a reference numeral 100 denotes an audio reproducer to be installed in a vehicle. Hereinafter, the audio reproducer 100 is referred to as a car audio 100. The car audio 100 is installed in a movable body, for example, a vehicle, and is audio equipment that reproduces music and the like recorded in a CD (compact disc), an MD (mini disc), and the like. Herein, the movable body is not limited to a vehicle, and can be any movable body such as an airplane, a ship, and the like. The car audio 100 is provided with a grille 200 and a main body 300.

As shown in Fig. 2, the grille 200 is provided with a housing 210. The housing 210 is formed to be a substantially thin box having an internal cavity (not shown) by a material such as a synthetic resin and a metal. And a display window 211 having a substantially rectangular shape is formed as an opening part at the position from substantially the front center to the left of the housing 210. The housing 210 is disposed, for example, at the front side of a main body case (not shown) of the main body 300. The housing 210 is turnably disposed so that the angle to the main body case of the main body 300 can be changed. And the grille 200 is provided with an input section 220 as an input member, a fingerprint detecting section 230 as a biological characteristic signal output member, a display 240 also functioning as a notifying member, a mode switching section (not shown), and the like. Here, a structure in which the input section 220 is disposed at the grille 200 is exemplified, but the structure is not limited thereto, and the input section 220 can be disposed at any position such as at a steering section.

The input section 220 is connected to the main body 300 such that a large variety of information can be sent to and received from the main body 300 and appropriately controls the operation of the main body 300. The operation contents of the main body 300, which the input section 220 can control, can be changed properly, and this will be described later in detail. The input section 220 is provided with an operation knob 221 as an operation section disposed, for example, at the right of the front side of the housing 210, an operation signal generating section (not shown) disposed in the housing 210, and the like.

The operation knob 221 is formed to be, for example, a substantially cylindrical shape having a short length by a material, for example, a plastic and the like, and is disposed such that the operation knob 221 can move in the direction toward the back side of the paper in Fig. 2 and also can rotate about the axis having the substantially cylindrical shape. At the substantially center of the front side of the operation knob 221, an abutment setting groove 222 having, for example, a substantially rectangular shape, is formed. Herein, as the operation knob 221, a so-called rotary type knob having substantially cylindrical shape with a short length is exemplified, but the operation knob 221is not limited thereto, and any structure which can execute a plurality of input operation can be used, such as a so-called cross shaped type having a cross shape surface in plan view, and a joy stick type having a substantially stick shape.

The operation signal generating section generates predetermined signals and outputs the predetermined signals to the main body 300, based on the input operation at the operation knob 221. Specifically, when the operation signal generating section recognizes that the operation knob 221 has been pushed down, the operation signal generating section generates a push-down signal Sou as an operation signal and outputs the Sou to the main body 300. When the operation signal generating section recognizes that the operation knob 221 has been turned in the right direction, the operation signal generating section generates a right-turn signal Smi as an operation signal and outputs the Smi to the main body 300. Further, when the operation signal generating section recognizes that the operation knob 221 has been turned in the left direction, the operation signal generating section generates a left-turn signal Shi being an operation signal and outputs the Shi to the main body 300.

The fingerprint detecting section 230 is connected to the main body 300 such that a large variety of information can be sent to and received from the main body 300, and detects a fingerprint as one of biological characteristics of a user, and outputs a fingerprint signal Syu corresponding to the shape of this fingerprint. Hereinafter, a fingerprint detected at the fingerprint detecting section 230 is referred to as a detected fingerprint. The fingerprint detecting section 230 is provided with, for example, a fingerprint abutment section 231 disposed in the abutment setting groove 222 of the operation knob 221, a light emitting section (not shown) disposed in the housing 210, an image sensor (not shown) being a biological characteristic signal generating section disposed in the housing 210, and the like. The fingerprint abutment section 231 is formed to be, for example, a substantially rectangular plate shape by a material having transparency, for example, glass and the like, and is disposed such that the surface of the fingerprint abutment section 231 becomes almost the same surface of the front of the operation knob 221. The light emitting section is disposed at a position where the light emitting section can emit light to the surface of the fingerprint abutment section 231 via the cavity of the substantially cylindrical shape of the operation knob 221. The image sensor is disposed at a position where light reflected from the fingerprint abutment section 231 via the space of the substantially cylindrical shape of the operation knob 221 can be detected. In the fingerprint detecting section 230, the light emitting section emits light to the fingerprint abutment section 231 on which a finger of a user has abutted, and the image sensor detects light reflected from the fingerprint abutment section 231 corresponding to the fingerprint having abutted on the fingerprint abutment section 231. Then, the fingerprint detecting section 230 generates the fingerprint signal Syu as the biological characteristic signal corresponding to the reflected light detected at the image sensor, and outputs the Syu to the main body 300. Herein, an optical structure in which the fingerprint signal Syu corresponding to the reflected light is generated is exemplified as the fingerprint detecting section 230. However, the structure is not limited thereto, and the following structures can be used a so-called temperature sensing structure, in which the fingerprint detecting section 230 generates the fingerprint signal Syu corresponding to the temperature distribution when a finger abuts on the fingerprint abutment section 231; a so-called semiconductor type structure, in which the fingerprint detecting section 230 generates the fingerprint signal Syu corresponding to the amount of electric charge at the time when a finger abuts on the fingerprint abutment section 231; and further, a so-called line type structure, in which the fingerprint abutment section 231 having a substantially thin long rectangular surface is employed and reflected light is detected continuously at the time when a finger moves on the surface of the fingerprint abutment section 231.

The display 240 is connected to the main body 300 in such a state that a large variety of information can be sent to and received from the main body 300. The display 240 is provided with a display screen 241, which displays an image data signal Sdp output from the main body 300 under the control of the main body 300, and the display screen 241 is disposed in the display window 211 of the housing 210. The image data to be displayed are various information showing operating states of the car audio 100, such as the track number of music being reproduced and the volume thereof. As the display 240, for example, a liquid crystal panel, an organic EL (Electro Luminescence) panel, a PDP (Plasma Display Panel), a CRT (Cathode-Ray Tube), an FED (Field Emission Display), an electrophoresis display panel, and the like can be used.

The mode switching section is connected to the main body 300 such that a large variety of information can be sent to and received from the main body 300. The mode switching section is operated at the time when an operation mode for controlling the operation of the car audio 100 as a default mode of the car audio 100 is switched to a fingerprint registration mode for registering information regarding a detected fingerprint in a fingerprint registration section 320 and a combination registration section 330, which will be described later. Herein, the structure in which the default mode of the car audio 100 is the operation mode is exemplified, but the structure is not limited thereto. The mode switching section is provided with, for example, a switching operation section (not shown) adapted to be pushed down and disposed on the front side of the housing 210, a switching signal generating section (not shown) disposed in the housing 210. When the mode switching section recognizes that the switching operation section has been pushed down at the switching signal generating section, the mode switching section generates a mode switching signal corresponding to the pushed down number of times and outputs the mode switching signal to the main body 300. Instead of providing the switching generating section, other configurations can be appropriately employed such as a configuration in which the mode switching signal is output when the switching signal generating section has recognized a voice "fingerprint registration".

The main body 300, as shown in Fig. 1, is provided with equipment 310 as a process executing member, the fingerprint registration section 320, the combination registration section 330 as a storage, a memory 340, a sound notification section 350 as a notifying member, a processor 360, and the like. The operation control apparatus of the present invention includes the processor 360 disposed in the main body 300, and the input section 220 and the fingerprint detecting section 230 disposed in the grille 200. Herein, without disposing the input section 220 in the grille 200, the operation control apparatus of the present invention can be includes the processor 360 and the fingerprint detecting section 230. Also, the process control apparatus of the present invention includes the equipment 310, the processor 360, the input section 220, and the fingerprint detecting section 230. Herein, without disposing the input section 220 in the grille 200, the process control apparatus of the present invention can include the equipment 310, the processor 360, and the fingerprint detecting section 230.

The equipment 310 is provided with, although not shown, a CD reproducing section, an MD reproducing section, a music server (hereinafter, referred to as an MSV) reproducing section, a tuner, a grille driving section, a sound output section, an equipment CPU (Central Processing Unit), and the like. Hereinafter, the CD reproducing section, the MD reproducing section, and the MSV reproducing section are properly referred to as the reproducing sections, when they are described collectively.

The CD reproducing section is connected to the equipment CPU. The CD reproducing section is provided with, although not shown, a CD loading section for the CD to be loaded, a CD pickup for reading music data recorded in the CD loaded on the CD loading section, a CD signal generating section for converting the music data read by the CD pickup into CD signals, and the like. The CD reproducing section, under the control of the equipment CPU, reads the music data recorded in the CD loaded on the CD loading section and converts the music data into CD signals properly and outputs the CD signals to the equipment CPU.

The MD reproducing section is connected to the equipment CPU. The MD reproducing section is provided with an MD loading section (not shown) for an MD to be loaded, an MD pickup reading music data recorded in the MD loaded on the MD loading section, an MD signal generating section that converts the music data read by the MD pickup into MD signals, and the like. The MD reproducing section, under the control of the equipment CPU, reads the music data recorded in the MD loaded on the MD loading section and converts the music data into MD signals properly and outputs the MD signals to the equipment CPU.

The MSV reproducing section is connected to an MSV (not shown) and also to the equipment CPU. The MSV reproducing section is provided with an MSV reading section for reading music data recorded in the MSV, an MSV signal generating section for converting the music data read by the MSV reading section into MSV signals, and the like. The MSV reproducing section, under the control of the equipment CPU, reads the music data recorded in the MSV and converts the music data into MSV signals properly and outputs the MSV signals to the equipment CPU.

The tuner is connected to an antenna (not shown) that receives broadcast waves and also to the equipment CPU. The tuner obtains signals received by and input from the antenna under the control of the equipment CPU. Then, the tuner converts the obtained signals into received signals properly and outputs the received signals to the equipment CPU.

The grille driving section is disposed, for example, from inside of the main body case of the main body 300 to the housing 210 of the grille 200. The grille driving section is connected to the equipment CPU. The grille driving section changes the angle between the main body case of the main body 300 and the housing 210 of the grille 200, by rotating the grille 200 under the control of the equipment CPU.

The sound output section is provided with speakers disposed at, for example, an instrument panel, door sections, and a rear dashboard section in a vehicle. The sound output section is connected to the equipment CPU. The sound output section outputs later-described music signals from the equipment CPU from speakers by a sound under the control of the equipment CPU.

The equipment CPU is connected to the processor 360. When the equipment CPU received a later-described operation control signal Scs from the processor 360, the equipment CPU makes each of the reproducing sections, the tuner, and the grille driving section work properly based on the contents included in the operation control signal Scs. For example, in case that the operation control signal Scs includes a content to start the reproduction of some music at the CD reproducing section, the equipment CPU controls the operation of the CD reproducing section to start to reproduce the music. Then, when the equipment CPU received CD signals from the CD reproducing section, the equipment CPU converts the CD signals into music signals and outputs the music signals to the sound output section, so that the music is output from the sound output section outputs. In case that the operation control signal Scs includes a content to switch the sound to be output from the sound output section to a sound with presence, the equipment CPU switches the sound to be output from the sound output section to the sound with presence.

The memory 340 readably stores later-described function setting information showing functions of the equipment 310 generated by the processor 360 and operated by the input section 220, and fingerprint function information 40 shown in Fig. 3.

The fingerprint function information 40 is, for example, information regarding the functions of the equipment 310 to be operated by the input section 220 corresponding to each finger of the left hand, and is used when later-described combination information 80nis generated. Hereinafter, the functions of the equipment 310 to be operated by the input section 220 are referred to as operable functions for convenience of description. The fingerprint function information 40 is composed of a database having a table structure in which finger information 41, push-down information 42, right-turn information 43, and left-turn information 44 are incorporated as one record.

The finger information 41 is information identifying a finger corresponding to the operable functions represented in the push-down information 42, the right-turn information 43, and the left-turn information 44. This finger information 41 is data made up with information regarding fingers.

The push-down information 42 is information regarding functions to be processed by the equipment 310 when the operation knob 221 of the input section 220 has been pushed down, corresponding to the finger identified by the finger information 41. This push-down information 42 is data made up with information regarding functions to be processed by the equipment 310. For example, "SOURCE OFF" corresponding to the thumb identified by the finger information 41 signifies that a function to be processed when the operation knob 221 has been pushed down is a function for turning off the power source of the car audio 100 (hereinafter, referred to as a source off function). "CD" corresponding to the index finger signifies a function for starting to reproduce music at the CD reproducing section (hereinafter, referred to as a CD reproducing function). "MD" corresponding to the middle finger signifies a function for starting to reproduce music at the MD reproducing section (hereinafter, referred to as an MD reproducing function). "TUNER" corresponding to the ring finger signifies a function for starting to receive broadcast waves at the tuner (hereinafter, referred to as a tuner reception function). "MSV" corresponding to the little finger signifies a function for starting to receive music at the MSV reproducing section (hereinafter, referred to as an MSV reproducing function).

The right-turn information 43 is information regarding a function to be processed by the equipment 310 when the operation knob 221 of the input section 220 has been turned in the right direction, corresponding to the finger identified by the finger information 41. This right-turn information 43 is data made up with information regarding functions to be processed by the equipment 310. For example, "ANGLE UP" corresponding to the thumb identified by the finger information 41 signifies that a function to be processed when the operation knob 221 has been turned in the right direction is a function for turning the housing 210 of the grille 200 in a direction increasing the angle relative to the main body case of the main body 300 (hereinafter, referred to as an angle up function). "VOL. UP" corresponding to the index finger signifies a function for turning up the volume of the sound output from the sound output section (hereinafter, referred to as a volume up function). "TRACK UP" corresponding to the middle finger signifies a function for stopping the reproduction of music being reproduced at each of the reproducing sections and starting to reproduce the next music of this music (hereinafter, referred to as a track up function). And "SFC ON" corresponding to the ring finger signifies a function for turning on a so-called SFC (Sound Field Control) function which switches the sound output from the sound output section to the sound with presence (hereinafter, referred to as an SFC on function). "REPEAT ON" corresponding to the little finger signifies a function for turning on a so-called repeat function that reproduces music again after finishing the reproduction of the music at each of the reproducing sections (hereinafter, referred to as a repeat on function).

The left-turn information 44 is information regarding a function to be processed by the equipment 310 when the operation knob 221 of the input section 220 has been turned in the left direction, corresponding to the finger identified by the finger information 41. This left-turn information 44 is data made up with information regarding functions to be processed by the equipment 310. For example, "ANGLE DOWN" corresponding to the thumb to be identified by the finger information 41 signifies that a function to be processed when the operation knob 221 has been turned in the left direction is a function fur turning the housing 210 of the grille 200 in a direction decreasing the angle relative to the main body case of the main body 300 (hereinafter, referred to as an angle down function). "VOL. DOWN" corresponding to the index finger signifies a function for turning down the volume of the sound output from the sound output section (hereinafter, referred to as a volume down function). "TRACK. DOWN" corresponding to the middle finger signifies a function for stopping the reproduction of music being reproduced at each of the reproducing sections and reproduces the music again from the beginning (hereinafter, referred to as a track down function). "SFC OFF" corresponding to the ring finger signifies a function for turning off the SFC function (hereinafter, referred to as an SFC off function). And "REPEAT OFF" corresponding to the little finger signifies a function for turning off the repeat function (hereinafter, referred to as a repeat off function).
Herein, the operable functions corresponding to each finger are not limited to the combination shown in Fig. 3, and other combinations can be employed.

The memory 340 stores various programs to be utilized on the OS (operating system) that controls the whole operation of the car audio 100. As the memory 340, a memory, such as a CMOS (complementary metal-oxide semiconductor) memory, which holds the memory even when the power source is turned off due to, for example, a power failure is preferable. Herein, the memory 340 may employ a structure having a driver or a drive that readably stores data on recording media such as a HD (hard disc), a DVD (digital versatile disc), an optical disc, and a memory card.

The fingerprint registration section 320 readably stores fingerprint registration information 50 as shown in Fig. 4. The fingerprint registration section 320 may employ a structure having a driver or a drive that readably stores data on recording media such as a magnetic disk like a HD, an optical disc like a DVD and a CD, a magneto-optical disk, and a memory card.

The fingerprint registration information 50 is information regarding fingerprints, which have been detected at the fingerprint detecting section 230 and registered by the processor 360. Hereinafter, the fingerprints registered by the processor 360 are referred to as the registered fingerprints properly. The fingerprint registration information 50 is information having a table structure in which a plurality of fingerprint information 60m (m is an integer) is composed of one data structure.

The fingerprint information 60m is information regarding one registered fingerprint. The fingerprint information 60m is information having a table structure in which fingerprint identification information 61m (m is an integer) and minutiae information 62m (m is an integer) are composed of one data structure. Herein, the fingerprint information 60m can be deleted and changed by the processor 360 properly.

The minutiae information 62m is information showing characteristic of the registered fingerprints. The minutiae information 62m has information showing, for example, the positions and the directions of the minutiae of the registered fingerprints such as end points and branch points. The minutiae information 62m is made to be the same information as later-described fingerprint analysis information to be generated by the processor 360. Herein, the minutiae information 62m includes information showing characteristic of the minutiae of the fingerprints such as the end points and the branch points. However, the information is not limited thereto, and other information showing characteristic of the minutiae of the registered fingerprints can be employed. Further, the minutiae information 62m can be includes an image of the registered fingerprint.

The fingerprint identification information 61m is information for identifying a registered fingerprint, in which the fingerprint characteristic is represented by the minutiae information 62m. This fingerprint identification information 61m has a structure in which, for example, data showing a numeral and data showing an alphabet constitute one data structure. That is, the fingerprint identification information 61m is constituted by a combination of a numeral and an alphabet. Herein, as the fingerprint identification information 61m, a structure including a combination of a numeral and an alphabet is exemplified, but the structure is not limited thereto, and other structures including a combination of a Chinese character and a sign, only alphabets, only numerals, and the like can be employed.

The combination registration section 330 readably stores combination registration information 70 as shown, in Fig. 5. As the combination registration section 330, for example, the same structure of the fingerprint registration section 320 can be employed.

The combination registration information 70 is information regarding the operable functions corresponding to the detected fingerprints. This combination registration information 70 has a table structure in which a plurality of the combination information 80n (n is an integer) consists one data structure.

The combination information 80n is information regarding the operable functions corresponding to one detected fingerprint. This combination information 80n has a table structure in which fingerprint identification information 81n (n is an integer) as a biological characteristic identification information and function identification information 82n (n is an integer) as process identification information consist one data structure. Herein, the combination information 80n can be deleted and changed by the processor 360 properly.

The fingerprint identification information 81n is information for identifying a detected fingerprint associated with the operable functions shown by the function identification information 82n. This fingerprint identification information 81n is the same information as any one of the fingerprint identification information 61m registered in the fingerprint registration section 320.

The function identification information 82n is information regarding the operable functions associated with a detected fingerprint identified by the fingerprint identification information 81n. This function identification information 82n has a table structure in which push-down function information 83n (n is an integer), right-turn function information 84n (n is an integer), and left-turn function information 85n (n is an integer) consist one data structure.

The push-down function information 83n is information showing a function to be operated when the operation knob 221 of the input section 220 is pushed down. This push-down function information 83n is the same information as any one of the push-down information 42 of the fingerprint function information 40.

The right-turn function information 84n is information showing a function to be operated when the operation knob 221 of the input section 220 is turned in the right direction. This right-turn function information 84n is the same information as any one of the right-turn information 43 of the fingerprint function information 40.

The left-turn function information 85n is information showing a function to be operated when the operation knob 221 of the input section 220 has been rotated in the left direction. This left-turn function information 85n is the same information of any one of the left-turn information 44 of the fingerprint function information 40.

The sound notification section 350 is provided with, for example, a speaker (not shown). This sound notification section 350 outputs various signals Sad such as voice data from the processor 360 from the speaker by a voice under the control of the processor 360. The information to be output by a voice is, for example, a guide of a finger to be touched on the fingerprint detecting section 230, and a guide of the operable functions. The sound notification section 350 is not limited to a structure being disposed in the main body 300, and may have a structure utilizing the sound output section of the equipment 310.

The processor 360 is provided with input/output ports (not shown)such as an operation port to be connected to the input section 220, a fingerprint detection port to be connected to the fingerprint detecting section 230, a display port to be connected to the display 240, an equipment port to be connected to the equipment 310, a fingerprint registration port to be connected to the fingerprint registration section 320, a combination registration port to be connected to the combination registration section 330, a memory port to be connected to the memory 340, a sound notification port to be connected to the sound notification section 350, and the like. And as shown in Fig. 1, as various programs, the processor 360 is provided with a fingerprint collating member 361, a registration information generating member 362 that also functions as an information generator, an operation function setting member 363 that functions as a process controller, an equipment control member 364 that functions as a process controller, a counter 365 that functions as a timer, and the like.

The fingerprint collating member 361, at the operation mode and the fingerprint registration mode, analyzes a detected fingerprint, and determines whether this detected fingerprint has been registered in the fingerprint registration section 320, that is, determines whether the detected fingerprint is a registered fingerprint. Specifically, the fingerprint collating member 361 recognizes the shape and the like of the detected fingerprint, based on the fingerprint signal Syu input from the fingerprint detecting section 230. The fingerprint collating member 361 generates fingerprint analysis information showing, for example, the positions and the directions of the plural minutiae, such as the end points and the branch points of the detected fingerprint. Then, the fingerprint collating member 361 searches minutiae information 62m having the same information as the fingerprint analysis information in fingerprint registration information 50 of the fingerprint registration section 320. If it is found, the fingerprint collating member 361 determines that the detected fingerprint is the registered fingerprint. On the other hand, if it is not found, the fingerprint collating member 361 determines that the detected fingerprint is not the registered fingerprint. Herein, in case that the minutiae information 62m is constituted by an image of the registered fingerprint, a structure can be employed, in which a reproduced image of the shape of the detected fingerprint is generated based on the fingerprint signal Syu so that the minutiae information 62m having the same image with the reproduced image is searched.

When the fingerprint collating member 361, at the operation mode and the fingerprint registration mode, determines that the detected fingerprint is the registered fingerprint, the fingerprint collating member 361 determines whether an operable function has been associated with this detected fingerprint. Specifically, the fingerprint collating member 361 obtains fingerprint information 60m having the searched minutiae information 62m. Next, the fingerprint collating member 361 searches fingerprint identification information 81n having the same information as the fingerprint identification information 61m incorporated in this fingerprint information 60m, in the combination information 80n of the combination registration section 330. If it is found, the fingerprint collating member 361 determines that the operable function has been associated with the detected fingerprint. On the other hand, it is not found, the fingerprint collating member 361 determines that the operable function is not associated with the detected fingerprint.

When the registration information generating member 362, at the fingerprint registration mode, recognizes that the fingerprint collating member 361 determines that the detected fingerprint is not the registered fingerprint, the registration information generating member 362 determines that fingerprint information 60m regarding this detected fingerprint has not been registered in the fingerprint registration section 320. Also, the registration information generating member 362 determines that combination information 80n regarding this detected fingerprint has not been registered in the combination registration section 330. The registration information generating member 362 then generates fingerprint information 60m and combination information 80n and registers them in the fingerprint registration section 320 and the combination registration section 330 respectively.

Specifically, when the registration information generating member 362 obtained one mode switching signal from the switching operation section of the mode switching section, the registration information generating member 362 recognizes that the mode has been switched to the fingerprint registration mode for registering the detected fingerprint of the thumb. Then, the registration information generating member 362 causes the sound notification section 350 to output a voice such as "Please put your thumb." to notify the user. When the registration information generating member 362 obtains two, three, four, and five mode switching signals respectively, the registration information generating member 362 recognizes and notifies that the mode has been switched to the fingerprint registration mode for respectively registering the detected fingerprint of the index finger, the middle finger, the ring finger, and the little finger. Herein, a structure in which a finger to be registered is changed corresponding to the number of obtained mode switching signals is exemplified, but the structure is not limited thereto, and a structure in which all fingers are registered sequentially or each of arbitrary fingers is registered sequentially when one mode switching signal is obtained, can be employed.

After this, when the registration information generating member 362 recognizes that the fingerprint collating member 361 determines that the detected fingerprint is not the registered fingerprint, the registration information generating member 362 generates fingerprint specific information in which, for example, a numeral and an alphabet are incorporated arbitrarily. The registration information generating member 362 generates fingerprint information 60m by incorporating the fingerprint specific information as fingerprint identification information 61 m and e fingerprint analysis information generated at the fingerprint collating member 361 as minutiae information 62m, by making , and makes the fingerprint registration section 320 readably store the fingerprint information 60m. Next, the registration information generating member 362, based on the fingerprint function information 40, recognizes the operable function associated with the finger having the detected fingerprint, and generates the combination information 80n. For example, in case of the fingerprint registration mode for registering the detected fingerprint of the thumb, the registration information generating member 362 recognizes that the function caused to be processed at the time when the input section 220 is pushed down is the source off function associated with the thumb, and accordingly generates the push-down function information 83n. The registration information generating member 362 recognizes that the function caused to be processed at the time when the input section 220 is rotated in the right and left directions respectively is the angle up function and the angle down function respectively associated with the thumb, and generates the right-turn function information 84n and the left-turn function information 85n respectively. Then, the registration information generating member 362 generates the function identification information 82n in which the function information 83n, 84n, and 85n are incorporated. Next, the registration information generating member 362 incorporates the fingerprint specific information as the fingerprint identification information 81n, and also generates the combination information 80n with the function identification information 82n incorporated. The registration information generating member 362 makes the combination registration section 330 readably store the combination information 80n. After this, when the mode has been switched to the fingerprint registration mode for registering the detected fingerprint of each finger excluding the thumb, the registration information generating member 362 similarly generates the fingerprint information 60m and the combination information 80n and makes the fingerprint registration section 320 and the combination registration section 330 register them respectively such that they can be read properly.

The registration information generating member 362, at the fingerprint registration mode, determines that the fingerprint information 60m regarding this detected fingerprint has been registered in the fingerprint registration section 320 in case that the fingerprint collating member 361 determines that the detected fingerprint is the registered fingerprint. After this, in case that the fingerprint collating member 361 determines that an operable function has not been associated with this detected fingerprint, the registration information generating member 362 determines that combination information 80n regarding this detected fingerprint has not been registered in the combination registration section 330. The registration information-generating member 362 then generates combination information 80n to register in the combination registration section 330.

Specifically, after the fingerprint collating member 361 determines that the detected fingerprint is the registered fingerprint, the registration information generating member 362 recognizes that it is determined an operable function has not been associated with this detected fingerprint. Next, the registration information-generating member 362 recognizes for which finger the fingerprint registration mode is being executed to register the detected fingerprint. The registration information generating member 362 recognizes an operable function associated with the finger having the detected fingerprint, based on the fingerprint function information 40, and as mentioned above, generates the function identification information 82n in which each function information 83n, 84n, and 85n has been incorporated. Then, the registration information generating member 362 incorporates the fingerprint identification information 61m of the fingerprint information 60m obtained at the fingerprint collating member 361 as the fingerprint identification information 81n, and also generates the combination information 80n in which the function identification information 82n has been incorporated. The registration information generating member 362 makes the combination registration section 330 readably store this combination information 80n.

At the operation mode, in case that the fingerprint collating member 361 determines that an operable function has been associated with the detected fingerprint, the operation function setting member 363 sets the operable function to the function associated with the detected fingerprint. More specifically, the operation function setting member 363 obtains the combination information 80n having the fingerprint identification information 81n searched at the fingerprint collating member 361, and recognizes each function information 83n, 84n, and 85n of the function identification information 82n incorporated in this combination information 80n. When each of the signals Sou, Smi, and Shi is obtained from the input section 220, the operation function setting member 363 generates function setting information including information requesting to make the equipment 310 work based on the functions included in each of the recognized function information 83n, 84n, and 85n. And this function setting information is stored in the memory 340 properly.

At the operation mode, after the operation function setting member 363 sets the operable function to a function associated with the detected fingerprint, the operation function setting member 363 appropriately sets the set operable function to the default operable function being a predetermined process properly. That is, when the operation function setting member 363 has obtained each of signals Sou, Smi, and Shi from the input section 220, the operation function setting member 363 generates function setting information including information requesting to make work the equipment 310 based on the default operable function. The process in which the operation function setting member 363 sets a function to be operated at the input section 220 to the default operable function will be explained later in detail.

When the equipment control member 364, at the operation mode, recognizes input operation at the input section 220, the equipment control member 364 makes the equipment 310 work based on this input operation. Specifically, when the equipment control member 364 obtains each of signals Sou, Smi, and Shi, the equipment control member 364 obtains the equipment setting information generated at the operation function setting member 363. The equipment control member 364 recognizes an operable function corresponding to each of the obtained signals Sou, Smi, and Shi, based on this function setting information, and generates an operation control signal Scs including this operable function to output.

The counter 365 properly counts the elapsed time T1 from the time when an operable function is set to the function associated with the detected fingerprint, under the control of the operation function setting member 363.

### [Operation of Audio Reproducer]

Next, referring to the drawings, the operation of the car audio 100 will be explained.

### (Registration Processes of Fingerprint Information and Combination Information)

First, referring to Fig. 6 a registration processes of the fingerprint information 60m and the combination information 80n will be described as the operation of the car audio 100,. Herein, the registration processes of fingerprint information 602 and combination information 802 regarding the index finger are exemplified.

First, the car audio 100 is set to be the operation mode of the default, when it is tuned on. When a user has pushes down the switching operation section of the mode switching section, for example, twice, the processor 360 of the car audio 100 obtains two mode switching signals at the registration information generating member 362. Then, the registration information generating member 362controls the sound notification section 350 to output a voice such as "Please put your index finger." to notify that the mode has been switched from the operation mode to the fingerprint registration mode for registering the detected fingerprint of the index finger (step S101).

After this, when the index finger of the user is abutted on the fingerprint detecting section 230, the processor 360 recognizes that the fingerprint of the index finger has been detected at the fingerprint detecting section 230 by the fingerprint collating member 361 (step S102). And the processor 360 generates fingerprint analysis information by analyzing this detected fingerprint (step S103). Herein, the processor 360 generates fingerprint analysis information having the same information as, for example, minutiae information 622 by analyzing the detected fingerprint. And the fingerprint collating member 361 determines whether the detected fingerprint is the registered fingerprint, by searching the minutiae information 62m having the same information as the fingerprint analysis information (step S 104).

In the step S104, when the processor 360 determines that the detected fingerprint is not the registered fingerprint at the fingerprint collating member 361, the processor 360 generates fingerprint information 60m at the registration information generating member 362 to register in the fingerprint registration section 320 (step S105). More specifically, the registration information generating member 362 generates fingerprint specific information with for example, a numeral and an alphabet combined arbitrarily. The processor 360 generates fingerprint information 60m by incorporating this fingerprint specific information as the fingerprint identification information 61m and the fingerprint analysis information generated in the step S103. This fingerprint information 60m is readably stored in the fingerprint registration section 320. Herein, for example, fingerprint specific information called "2A" is generated. , The processor 360 generates fingerprint information 602 by incorporating this "2A" as the fingerprint identification information 612 and the fingerprint analysis information generated at the step S103 as the minutiae information 622 to register in the fingerprint registration section 320.

After this, the processor 360 generates the combination information 80n at the registration information generating member 362 to register in the combination registration section 330 (step S106). Specifically, the registration information generating member 362, based on the fingerprint function information 40, recognizes an operable function associated with the finger having the detected fingerprint. Next, the processor 360 generates the function identification information 82n with the operable function incorporated as each of function information 83n, 84n, and 85n. And the processor 360 generates the combination information 80n by incorporating the fingerprint specific information generated in the step S103 as the fingerprint identification information 81n and the function identification information 82n. Then, the processor 360 makes the combination registration section 330 readably store this combination information 80n. Herein, since the finger having the detected fingerprint is the index finger, the processor 360 generates push-down function information 832 indicating that the function to be processed when the input section 220 is pushed down is the CD reproducing function. Also, the processor 360 generates right-turn function information 842 indicating that the function to be processed when the input section 220 is turned in the right direction is the volume up function as well as left-turn function information 852 indicating that the function to be processed when the input section 220 is turned in the left direction is the volume down function. The processor 360 generates function identification information 822 with each of function information 832, 842, and 852 incorporated. Then, the processor 360 generates the combination information 802 by incorporating the "2A" as the fingerprint identification information 812 and the function identification information 822. The processor 360 registers this combination information 802 in the combination registration section 330. After this, the processor 360 ends the registration processes by switching the mode to the operation mode of the default.

In the step S104, when the processor 360 determines that the detected fingerprint is the registered fingerprint at the fingerprint collating member 361, the processor 360 obtains the fingerprint information 60m having the searched minutiae information 62m. The fingerprint collating member 361 searches fingerprint identification information 81n having the same information as the fingerprint identification information 61m of the obtained fingerprint information 60m, and determines whether an operable function has been associated with the detected fingerprint (step S107). In the step S107, when the processor 360 determines that an operable function has been associated with the detected fingerprint, the processor 360 ends the registration processes by switching the mode to the operation mode of the default.

On the other hand, in the step S107, when the processor 360 determines that an operable function has been not associated with the detected fingerprint, the processor 360 executes the process of the step S106. Specifically, the processor 360 recognizes for which finger the fingerprint registration mode is being executed to register the detected fingerprint at the registration information generating member 362. The processor 360, based on the fingerprint function information 40, recognizes an operable function associated with the finger having the detected fingerprint, and generates the function identification information 82n with each of function information 83n, 84n, and 85n incorporated. Next, the processor 360 generates combination information 80n by incorporating the fingerprint identification information 61m of the obtained fingerprint information 60m as the fingerprint identification information 81n and the function identification information 82n. The processor 360 makes the combination registration section 330 readably store this combination information 80n. Then, the processor 360 ends the registration processes by switching the mode to the operation mode of the default.

### (Setting Process of Operable functions)

Next, referring to Fig. 7, a setting process of operable functions will be described as the operation of the car audio 100. Herein, for the default operable function at the time when the operation knob is pushed down, the CD reproducing function is selected. For the default operable functions at the time when the operation knob is turned in the right and left directions respectively, the volume up function and the volume down function are respectively selected and exemplified, but the structure is not limited thereto. Also, as the operable function, a process for setting a function associated with the detected fingerprint of the middle finger identified by the fingerprint identification information 613 of the fingerprint information 603 and the fingerprint identification information 813 of the combination information 803 will be exemplified to describe.

For example, at the operation mode of the default, the car audio 100 recognizes that a fingerprint has been detected at the fingerprint detecting section 230 by the fingerprint collating member 361 (step S201). Then, the fingerprint analysis information is generated by analyzing this detected fingerprint (step S202). Herein, the detected fingerprint of the middle finger identified by the fingerprint identification information 613 is analyzed, and fingerprint analysis information having the same information as minutiae information 623 is generated.

The fingerprint collating member 361 determines whether the detected fingerprint is the registered fingerprint by searching the minutiae information 62m having the same information as the fingerprint analysis information (step S203). In the step S203, when the processor 360 determines that the detected fingerprint is not the registered fingerprint by the fingerprint collating member 361, the operation function setting member 363 returns the operable function being set at this time to the default operable function (step S204), and the setting process ends. Herein, the setting process ends in such a manner that the function at the time when the input section 220 is pushed down is returned to the CD reproducing function, the functions at the time when the input section 220 is turned in the right and left directions respectively is returned to the volume up function and the volume down function.

On the other hand, in the step S203, when the processor 360 determines that the detected fingerprint is the registered fingerprint by the fingerprint collating member 361, the processor 360 obtains the fingerprint information 60m having the searched minutiae information 62m. Herein, the fingerprint collating member 361 determines that the detected fingerprint is the registered fingerprint, because the minutiae information 623 being the same information as the fingerprint analysis information can be searched. The processor 360 then obtains the fingerprint information 603 having the minutiae information 623.

The fingerprint collating member 361 determines whether an operable function has been associated with the detected fingerprint, by searching the fingerprint identification information 81n having the same information as the fingerprint identification information 61m of the obtained fingerprint information 60m (step S205). In the step S205, when the processor 360 determines that an operable function has not been associated with the detected fingerprint, the processor 360 executes the process of the step S204, and ends the setting process.

On the other-hand, in the step S205, when the processor 360 determines that an operable function has been associated with the detected fingerprint, the operation function setting member 363 sets the operable function to a function associated with the detected fingerprint (step S206). Specifically, the operation function setting member 363 obtains the combination information 80n having the fingerprint identification information 81n searched in the step S205, and generates function setting information based on the combination information 80n. Herein, since the fingerprint identification information 813 same with the fingerprint identification information 613 of the fingerprint information 603 obtained at the fingerprint collating member 361 can be searched, the operation function setting member 363 obtains the combination information 803 having the fingerprint identification information 813. The processor 360, based on the function identification information 823 of the combination information 803, generates information that causes starting the reproduction of music at the MD reproducing section at the time when the operation knob 221 is pushed down. Also, the processor 360 generates information that causes stopping the reproduction of music and starting the reproduction of the next music at each of the reproducing sections at the time when the knob is turned in the right direction. Further, the processor 360 generates information that causes stopping the reproduction of music and causes reproducing the same music from its beginning again at each of the reproducing sections at the time when the knob is turned in the left direction. The processor 360 generates the function setting information in which the above-mentioned generated information is included.

The operation function setting member 363 notifies the function name set in the step S206 (step S207). Specifically, the operation function setting member 363 causes the sound notification section 350 to output a voice notifying the function name and display the corresponding words on the display 240. For example, the following guidance message is notified by a voice and displayed on the display: "MD is reproduced by push-down operation, Track Up is executed by right-turn operation, and Track Down is executed by left-turn operation." Herein, for a structure to notify the function name that has been changed and reset is not limited to the above-mentioned structure notifying by the voice and the displayed words. Any structure can be employed as long as the function name can be distinguished, such as; a buzzer or a sound of a music instrument output from the sound notification section 350 corresponding to the contents of the change, and changing a displaying color of the display 240 to a color corresponding to the contents of the change. After this, the operation function setting member 363 causes the counter 365 to start counting the elapsed time T1.

When the user, for example, turns the operation knob 221 in the right direction from this state, the equipment control member 364 recognizes the input operation of the operation knob 221, and also obtains equipment setting information. Based on this equipment setting information, the equipment control member 364 generates the operation control signal Scs that causes starting the reproduction of the next music of music being reproduced to output to the equipment 310. When the equipment 310 obtains the operation control signal Scs at the equipment CPU, the equipment 310 controls the operation of, for example, the MSV reproducing section reproducing the music based on this operation control signal Scs to reproduce the next music of the music being reproduced.

The operation function setting member 363 then determines whether the elapsed time T1 being counted by the counter 365 is longer than the preset time T0 which is set to, for example, 10 seconds beforehand (step S208). Herein, the structure with the preset time T0 being set to 10 seconds is exemplified. However, the structure is not limited thereto, and any structure with the preset time T0 being set to any appropriate time, such as 5 seconds or 3 seconds, can be employed. In case that the operation function setting member 363 determines that the elapsed time T1 is longer than the preset time T0 in the step S208, the setting process ends by executing the process at the step S204.

On the other hand, in the step S208, in case that the processor 360 determines that the elapsed time T1 is shorter than the preset time T0 at the operation function setting member 363, the fingerprint collating member 361 determines whether a new fingerprint has been detected at the fingerprint detecting section 230 (step S209). In the step S209, in case that the fingerprint collating member 361 determines that a new fingerprint has been detected, the process returns to the step S202.

In the step S209, in case that the processor 360 determines that a new fingerprint is not detected at the fingerprint collating member 361, the operation function setting member 363 determines whether the input section 220 has been operated (step S210). In the step S210, when the operation function setting member 363 determines that the input section 220 has not been operated, the process returns to the step S208.

In the step S210, when the operation function setting member 363 determines that the input section 220 has been operated, the process returns to the step S208 after returning the elapsed time T1 to 0 (step S211).

As mentioned above, according to the embodiment of the present invention, in the processor 360 of the car audio 100, when the equipment control member 364 obtains each of the signals Sou, Smi, and Shi corresponding to the three kinds of input operation, the push-down, the right-turn, and the left-turn from the input section 220, the processor 360 generates the operation control signal Scs for making the equipment 310 work with the function corresponding to each input operation based on the function setting information, and outputs the operation control signal Scs. When the fingerprint detecting section 230 detects a fingerprint, the fingerprint detecting section 230 generates a fingerprint signal Syu corresponding to this fingerprint to output. When the processor 360 receives the fingerprint signal Syu, the operation function setting member 363 generates the function setting information in which a function corresponding to each input operation of the input section 220 is set to a function associated with the fingerprint.

Therefore, at the car audio 100, functions corresponding to the three kinds of input operation are set by functions associated with a fingerprint of each finger properly, so that, for example, by the detection of fingerprint of each finger of the left hand, fifteen kinds of functions can be properly set at maximum. Consequently, fifteen kinds of operation can be executed at the car audio 100 without disposing, for example, five input sections 220 or fifteen input operation sections, each of which is capable of one input operation. Therefore, by associating the input section 220 with fingerprints, it is not required to dispose the operation knobs 221 of the number corresponding to the functions, and a plurality of complex operation can be executed easily by a simple structure.

The car audio 100 is provided with the combination registration section 330 that stores the combination information 80n, in which the fingerprint identification information 81n identifying the detected fingerprint corresponding to the fingerprint signal Syu and the function identification information 82n regarding the operable functions are constitute one data structure. The operation function setting member 363 identifies the combination information 80n by searching the fingerprint identification information 81n of the detected fingerprint corresponding to the fingerprint signal Syu from the combination registration section 330. Then, the operation function setting member 363, based on the function identification information 82n of this identified combination information 80n, generates function setting information in which operable functions have been set. Therefore, the operation function setting member 363, by a simple method in which only the fingerprint identification information 81n of the detected fingerprint is searched, can set the operable function to the function associated with the fingerprint signal Syu. Consequently, the operation function setting member 363 can execute the setting process of the operable function easily. Further, by a simple data structure in which the fingerprint identification information 81n and the function identification information 82n are only incorporated into the combination information 80n, the operable function can be set to the function associated with the fingerprint signal Syu. Therefore, the data amount of the combination information 80n can be minimized, so that the capacity of the combination registration section 330 can be minimized.

The car audio 100 is provided with the registration information generating member 362 for generating combination information 80n and making the combination registration section 330 store the combination information 80n. Therefore, the car audio 100 can generate the combination information 80n corresponding to the fingerprints of, for example, a plurality of users properly. Consequently, the operable functions corresponding to, for example, a plurality of users can be newly and appropriately set, so that the ease of use of the car audio 100 can be improved.

When an operable function is set, the operation function setting member 363 makes the sound notification section 350 and the display 240 notify this set contents. Therefore, the user can recognize the operable function easily and can execute desired operation securely. Consequently, the ease of use of the car audio 100 can be further improved.
The set contents of the operable function are notified by a voice from the sound notification section 350. Therefore, even while driving a car, the user can recognize the operable function without looking at the display. Therefore, the ease of use of the car audio 100 can be further improved.

The counter 365 is provided in the car audio 100 for counting the elapsed time T1 after the operable function has been changed. When the operation function setting member 363 determines that the elapsed time T1 is longer than the preset time T0, the operation function setting member 363 returns the operable function to the default operable function. Therefore, the user can return the operable function to the default operable function without any special operation. Consequently, the operability of the car audio 100 can be improved and thus the ease of use of the car audio 100 can be further improved.

The default operable function is set to the volume up function and the volume down function (hereinafter, referred to as a volume adjusting function properly) whose operation frequency is generally high. Therefore, in changing the operable function to the volume adjusting function with high operation frequency, the user only requires waiting fort the elapsed time T1 to be longer than the preset time, and thus the fingerprint collation is not required. Therefore, the operability of the car audio 100 can be further improved as well as the ease of use.

The fingerprint detecting section 230 detects a fingerprint as a biological characteristic, and the operable function is set corresponding to a finger having this detected fingerprint. Therefore, the user can set the operable function properly by a simple method in which the user only abuts his/her finger on the fingerprint detecting section 230. Consequently, the operability in setting the operable function can be improved and thus the ease of use of the car audio 100 can be further improved.

As the operable function corresponding to the index finger whose operability is generally high, the volume adjusting function with generally high operation frequency is set. Therefore, in case that the user desires to adjust the volume quickly, the user can change the operable function to the volume adjusting function by the fingerprint collation of the index finger with high operability. Consequently, the operability in setting the operable function with high operation frequency is further improved, and the usability of the car audio 100 can be further improved.

When it is determined that the input section 220 is operated after starting counting the elapsed time T1, the operation function setting member 363 returns the elapsed time T1 to 0. Therefore, for example, in case that the user desires to operate an operable function associated with an arbitrary finger continuously, the user can operate the operable function as many times as require without the fingerprint collation as long as the operation interval is shorter than the elapsed time T1. Consequently, the operability in operating the operable function continuously is improved and thus the ease of use of the car audio 100 can be further improved.

The input section 220 is provided at the grille 200 of the car audio 100. Therefore, the user can recognize the position of the input section 220 easily, and can operate the car audio 100 easily.

The operation knob 221 of the input section 220 is structured to be capable of executing three kinds of input operation, that is, the push-down, the right-turn, and the left-turn. Therefore, by comparing with a structure, in which three operation knobs for respectively operating the above-mentioned three kinds of operation are disposed, the space for disposing the operation knob can be narrowed. Consequently, the grille 200 can be suitably downsized.

The fingerprint detecting section 230 is disposed at the operation knob 221 of the input section 220. Therefore, the user can execute the fingerprint collation by only memorizing the position of the operation knob 221, and the user can operate the plural functions of the car audio 100 more easily. Further, it is not required to have a special space for disposing only the fingerprint detecting section 230 in the car audio 100, therefore, the car audio can be downsized easily.

The operation control apparatus of the present invention is applied to the car audio 100. Therefore, the user can change the operable function properly by the fingerprint collation without looking at the display while driving operate the plural functions of the car audio 100 easily. Consequently, the operability of the car audio 100 can be further improved as well as the ease of use.

The car audio 100 is provided with the mode switching section for switching the operation mode to the fingerprint registration mode. Therefore, the user can switch the operation mode to the fingerprint registration mode by the operating the mode switching section, and the user can make the car audio 100 execute the registration processes of the fingerprint information 60m and the combination information 80n quickly.

The default mode of the car audio 100 is set to the operation mode with generally high frequency. A structure in which the fingerprint registration mode is switched to the operation mode automatically after finishing the registration processes by the fingerprint registration mode is employed. Therefore, after finishing the registration processes by the fingerprint registration mode, the user does not need to execute a special process in switching the mode to the operation mode with high frequency. Consequently, the operability of the car audio 100 can be further improved as well as the ease of use.

The car audio 100 is provided with the memory 340 for storing the fingerprint function information 40 showing the operable functions corresponding to each finger. The registration information generating member 362 recognizes for which finger the fingerprint registration mode is being executed to register the detected fingerprint, and then generates the combination information 80n corresponding to this detected fingerprint to be registered based on the fingerprint function information 40. Therefore, the user, by only executing the fingerprint collation of an arbitrary finger, can make the car audio 100 generate the combination information 80n corresponding to this finger. Consequently, the user can set the operable function corresponding to an arbitrary finger easily.

The registration information generating member 362 causes the sound notification section 350 to notify the finger whose detected fingerprint is registered. Therefore, the user can recognize the finger whose fingerprint is collated beforehand, and can set the operable function corresponding to an arbitrary finger by only executing the fingerprint collating based on the notified instruction. Consequently, the user can set the operable functions easily and securely.

### [Modification of Embodiment]

The present invention is not limited to the above-mentioned embodiment, but includes the following modification as long as the object of the present invention can be attained.

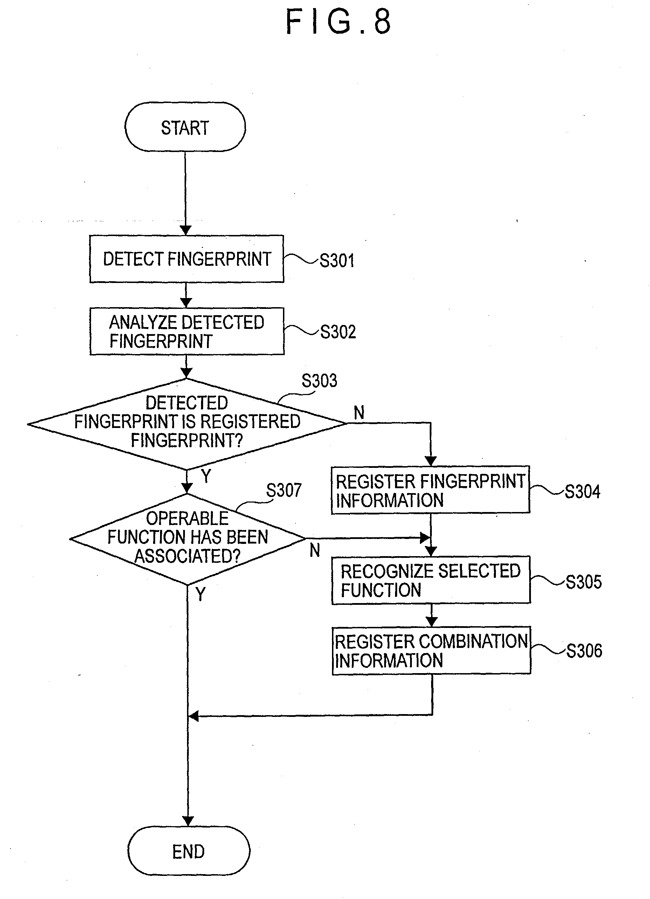

That is, a structure in which the processor 360 executes the registration processes of the fingerprint information 60m and the combination information 80n based on, for example, the flowchart shown in Fig. 8 can be employed.

In the registration processes shown in Fig. 8, when the processor 360 recognizes that a fingerprint of an arbitrary finger has been detected at the fingerprint detecting section 230 by the fingerprint collating member 361 after recognizing that the mode has been switched to the fingerprint registration mode by the registration information generating member 362 (step S301), the processor 360 analyzes this detected fingerprint by executing, for example, the process similar to the step S103 to generate fingerprint specific information (step S302). Then, the processor 360 determines whether the detected fingerprint is the registered fingerprint at the fingerprint collating member 361 by executing, for example, the process similar to the step S104 (step S 303).

In the step S303, when the processor 360 determines that the detected fingerprint is not the registered fingerprint at the fingerprint collating member 361, the processor 360 registers the fingerprint information 60m in the fingerprint registration section 320 at the registration information generating member 362 by executing, for example, the process similar to the step S105 (step S304). Then, the registration information generating member 362 recognizes the operable function selected by the user (step S305). Specifically, the registration information generating member 362 makes, for example, the display 240 also working as the notifying member notify process content candidate information which includes information regarding the operable function like, for example, the push-down information 42, the right-turn information 43, and the left-turn information 44 of the fingerprint function information 40. Then, for example, the input section 220 generates process content selection information including the operable function of the process content candidate information selected by the input operation of the user at the operation knob 221 to output. When the registration information generating member 362 obtains the process content selection information, the registration information generating member 362 recognizes the operable function selected by the user from this process content selection information. Then, the registration information generating member 362 registers the combination information 80n in the combination registration section 330 (step S306) and ends the registration processes. More specifically, the registration information generating member 362 generates the function identification information 82n with the operable function having been recognized at the step S305 incorporated as each of function information 83n, 84n, and 85n. The combination information 80n is generated by incorporating the generated function identification information 82n and fingerprint specific information generated at the step S302 as the fingerprint identification information 81n. Then, the registration information generating member 362 registers the combination information 80n in the combination registration section 330, and ends the registration processes.

On the other hand, in the step S303, when the processor 360 determines that the detected fingerprint is the registered fingerprint at the fingerprint collating member 361, the processor 360 determines whether an operable function has been associated with the detected fingerprint by executing the process similar to the step S107 (step S307). In the step S307, when the processor 360 determines that an operable function has been associated with the detected fingerprint, the processor 360 ends the registration process. On the other hand, in the step S307, when the processor 360 determines that an operable function has not been associated with the detected fingerprint, the processor 360 executes the processes of the steps S305 and S306to register the combination information 80n in the combination registration section 330, and ends the registration processes. Such structure enables the operable function to correspond to a desired finger of the user. Therefore, the user can recognize the operable function corresponding to each finger easily, and can operate the car audio 100 more easily.

The structure in which a function is provided to the operation function setting member 363 to make the sound notification section 350 and the display 240 notify the set contents of the operable function is exemplified. However, any structure in which such function is not provided or the notification is executed by only the display 240 can be employed. With such structure, the operation function setting member 363 can be further simplified.

The structure in which a function for returning the operable function to the default operable function is provided to the operation function setting member 363 when it is determined that the elapsed time T1 is longer than the preset time T0 is exemplified, but a structure, without such function can be employed. With such structure, once the user changes the operable function, the user can keep this state until the setting process is executed again. Therefore, in case that the user desires to operate an operable function associated with an arbitrary finger continuously, the user can operate as many times as possible without executing the fingerprint collating newly. Consequently, the operability is improved in operating the same operable function continuously, and the ease of use of the car audio 100 can be further improved.

A structure in which a reset member for forcibly returning the operable function to the default operable function is provided in the car audio 100 can also be employed. With such structure, without waiting for the elapsed time T1 to pass the preset time T0, the user can return the operable function to the default operable function at the desired timing by the reset member. Therefore, the car audio 100 having high usability, which can return the operable function to the default operable function at the desired timing of the user can be provided.

The structure in which the default operable function is set to the volume adjusting function with generally high operation frequency is exemplified. However, a structure in which the user can set the default operable function properly can also be employed. With such structure, the user can set a desiring operable function to the default operable function. Therefore, the car audio 100 having high usability, in which the default operable function can be set according to the preference of the user can be provided.

The structure in which the operation function setting member 363 is provided with the function for resetting the elapsed time T1 to 0 in case that it is determined that the input section 220 has been operated after starting the count of the elapsed time T1 is exemplified, but a structure without such function can also be provided. With such structure, the operation function setting member 363 can be further simplified.

The structure in which the input section 220 is disposed at the grille 200 has been exemplified, but the structure is not limited thereto. A structure in which the input section 220 is disposed at, for example, a remote controller can be employed. With such structure, the user can make the car audio 100 execute the processes from a remote position.

In the structure in which the input section 220 is disposed at the remote controller, the fingerprint detecting section 230 can be disposed at the remote controller. With such structure, the user can set the operable functions from a remote position. Therefore, the car audio 100 having high usability, which the operable functions can be set from a remote position can be provided.

The structure provided the input section 220 capable of three kinds of input operation is exemplified. However, the structure is not limited thereto, and a structure provided with an input operation section capable of one kind of input operation can be employed. With such structure, by only providing three input operation sections capable of one kind of input operation, fifteen kinds of processes can be executed, so that a plurality of processes can be executed by a simple structure.

The structure in which the fingerprint detecting section 230 is disposed at the operation knob 221 of the input section 220 is exemplified. However, the structure is not limited thereto, and a structure in which the fingerprint detecting section 230 is disposed at any other position, for example, at the left position of the display 240 in Fig. 2 can be employed. With such structure, for example, an unintended execution of setting process of an operable function by touching the fingerprint detecting section 230 by mistake during input operation of the operation knob 221 can be prevented. Therefore, the user can securely execute the setting process of an intended operable function.

The structure in which the mode switching section for switching the operation mode to the fingerprint registration mode is provided in the car audio 100 is exemplified. However, the structure is not limited thereto, and a structure which makes the processor 360 execute the following process without providing the mode switching section can be employed.

For example, after the processor 360 executes the processes similar to, for example, the steps S201 and S202, the processor 360 executes the process similar to the step S203 to determine whether the detected fingerprint is the registered fingerprint. In case that the processor 360 determines that the detected fingerprint is not the registered fingerprint, the processor 360 executes the processes similar to the steps S105 and S106, and respectively registers the fingerprint information 60m and the combination information 80n in the respective registration sections 320, 330, and ends the processes. On the other hand, in case that the processor 360 determines that the detected fingerprint is the registered fingerprint, the processor 360 executes the process similar to the step S205 to determine whether an operable function has been associated with the detected fingerprint. In case that the processor 360 determines that an operable function has not been associated with the detected fingerprint, the processor 360 executes the process similar to the step S 106, and registers the combination information 80n in the combination registration section 330, and ends the processes. On the other hand, in case that the processor 360 determines that an operable function has been associated with the detected fingerprint, the processor 360 executes the processes similar to the steps S206 and S207, and changes the operable function. And the processor 360 executes the processes similar to the steps S208 to S211, and the step S204 properly.

With such structure, the user can make the car audio 100 execute the registration processes of the respective information 60m, 80n or execute the setting process of the operable functions appropriately without executing the input operation to switch to the operation mode or the fingerprint registration mode. Therefore, the operability of the car audio 100 can be improved further as well as the ease of use. Also, since the car audio 100 does not require a space for disposing the mode switching section, the car audio 100 can be downsized.

The structure in which the function causing the sound notification section 350 to notify a finger whose detected fingerprint is to be registered is provided in the registration information generating member 362 is exemplified, but a structure with no such function provided can be employed. With such structure, the structure of the registration information generating member 362 can be simplified. Further, the process of Step 101 can be omitted, and the registration processes of the respective information 60m, 80n can be executed more quickly.

The structure in which an operable function is associated corresponding to each finger abutted on the fingerprint detecting section 230 is exemplified. However, a structure in which an operable function is set corresponding to, for example, a fingerprint abutted on the fingerprint detecting section 230 and its abutment direction can also be employed. Specifically, for example, when the index finger is abutted on the fingerprint detecting section 230 in the up and down direction, the operable function is set to the volume adjusting function, and when the index finger is abutted on the fingerprint detecting section 230 in the right and left direction, the operable function is set to the track up function and the track down function (hereinafter, referred to as a music selection function). For another example, when the middle finger is abutted on the fingerprint detecting section 230 in the up and down direction, the operable function is set to a level adjusting function for adjusting the level, for example, of the high tone and the low tone of music being reproduced (hereinafter, referred to as a tone adjusting function). With such structure, by comparing with the structure of the above-mentioned embodiment, more operable functions can be associated with each finger. Therefore, by disposing only one input section 220 in the car audio 100, more processes can be executed as compared with the structure of the above-mentioned embodiment, and a plurality of processes can be easily executed by a simple structure.

For example, a structure in which each of the operable functions is set corresponding to a fingerprint abutted on the fingerprint detecting section 230 and its slid track on the surface can be employed. Specifically, for example, in case that the fingerprint detecting section 230 has a line-type structure, the following structure can be employed: when the index finger is slid upwardly, the operable function is set to the volume adjusting function; when the index finger is slid downwardly, the operable function is set to the music selection function; and when the middle finger is slid upwardly, the operable function is set to the tone adjusting function. In addition, in case that the area of the fingerprint abutment section 231 of the fingerprint detecting section 230 is formed with a shape having sufficiently larger than the fingerprint area, the following structures can be employed: when the middle finger is slid like T shape, the operable function is set to the music selection function; when the ring finger is slid like T shape, the operable function is set to the tone adjusting function; and when the index finger is slid like V shape, the operable function is set to the volume adjusting function. With such structure, as compared with the structure of the above-mentioned embodiment, more operable functions can be associated with each finger. Therefore, by disposing only one input section 220 in the car audio 100, more processes can be executed, as compared with the structure of the above-mentioned embodiment, and a plurality of processes can be easily executed by a simple structure. Further, with the structure having the fingerprint abutment section 231 a large shape, the user can set the operable functions to the music selection function and the tone adjusting function by sliding his/her finger like T shape easily conjuring the image of these functions, and to the volume adjusting function by sliding like V shape easily conjuring the imaging of the function. Therefore, the operability of the car audio 100 can be improved as well as the ease of use.

For example, a structure in which the area of the fingerprint abutment section 231 of the fingerprint detecting section 230 is formed with a shape having an area sufficiently larger than the area of the fingerprint and an operable function is set corresponding to the fingerprint abutted on the fingerprint abutment section 231 and its abutment position can be employed. Specifically, the following structure can be employed; when the index finger is abutted on the right upper part of the fingerprint abutment section 231, the operable function is set to the volume adjusting function, when the index finger is abutted on the left lower part, the operable function is set to the music selection function; and when the middle finger is abutted on the right upper part, the operable function is set to the tone adjusting function. With such structure, as compared with the structure of the above-mentioned embodiment, more operable functions can be associated with each finger. Therefore, by disposing only one input section 220 in the car audio 100, more processes can be executed as compared with the structure of the above-mentioned embodiment, and a plurality of processes can be easily executed by a simple structure.

For example, the following structure can also be employed: for example, when the index finger is abutted on the fingerprint detecting section 230 and the operation knob 221 is turned by a predetermined angle, the operable function is set to "3" as the changing width of the level to change the volume; when the middle finger is abutted on the fingerprint detecting section 230 and the operation knob 221 is turned by a predetermined angle, the operable function is set to "5" as the changing width of the level to change the volume. With such structure, the user can change the volume to a desired level quickly.

The operation control apparatus of the present invention can be applied to a building such as a house. In this case, for example, an input member having an operation member of a rotary type similar to the operation knob 221 of the above-mentioned embodiment, a biological characteristic signal output member similar to the fingerprint detecting section 230 of the above-mentioned embodiment, a process controller, a process content setting member, a process executing member, and the like are disposed near the entrance of a room,. In such structure, for example, when the index finger is abutted on the biological characteristic signal output member, the process content setting member sets an operable function to a function to lock/unlock a door, when the middle finger is abutted, an operable function is set to a function to turn on/off the light, and when the ring finger is abutted, an operable function is set to a function to turn on/off an air conditioner. Then, when the process controller recognizes input operation by the input member, the process controller, based on the operable function set by the process content setting member, makes the process executing member execute various processes. With such structure, similar to the above-mentioned embodiment, for example, by disposing only one input member, a plurality of processes can be executed by the process executing member, and the plurality of processes can be easily executed by a simple structure.

In the above-mentioned structure in which the present invention is applied to a building, at least either the input member or the biological characteristic signal output member may be disposed at the plural positions in a room. With this structure, plural processes can be executed from the plural positions in the room. On the other hand, if the input member and the biological characteristic signal output member are disposed at the outside of the house, the user does not need to carry a key or a card to lock the door. Therefore, a building having a high convenience can be provided. Herein, in case that the present invention is applied to a building, a structure having the fingerprint detecting section 230, the equipment control member 364, the input member, the biological signal output member having functions similar to the above-mentioned functions, can be employed.

The operation control apparatus of the present invention can be applied to, for example, a television set, a reproducing apparatus and a recording/reproducing apparatus of a recording medium such as a DVD and a videotape. In this case, the user can make the television set, the reproducing apparatus, and the recording/reproducing apparatus execute a plurality of processes, without looking away from images being displayed on, for example, the television set. Therefore, the operability of the television set, the reproducing apparatus, and the recording/reproducing apparatus can be improved as well as their ease of use can be improved.

For example, a structure in which each of operable functions is correspondingly associated with the order of finger abutted on the above-mentioned fingerprint detecting section 230 or the biological characteristic signal output member can be employed. Also, a structure in which the plurality of fingerprint detecting sections 230 and biological characteristic signal output members are disposed and each of the operable functions has been associated with the order of finger abutted on them can be employed. With such structure, as compared with the above-mentioned structures, more processes can be executed by the car audio 100 or the process executing member by providing only one input section 220 or the input member, and a plurality of processes can be easily executed by a simple structure.

The operation control apparatus according to the present invention can be applied to any equipment, for example, an installation type audio reproducing apparatus, a setting type audio recording/reproducing apparatus, a personal computer of installation type or portable type, a mobile phone, a car navigation device, which execute a plurality of processes.

The structures using fingerprints as the biological characteristic is exemplified. However, the biological characteristic is not limited thereto, and a vein of each finger, a voice, an iris, a face, a tooth form, and the like, and a combination thereof can be used.

The above-mentioned each function is constituted as a program. However, each function can be constituted by any component, for example, hardware like a circuit board, or an element like one IC. Further, with a structure in which each function is read from a program or a separate recording medium, its handling becomes easy, and the expansion of its utilization can be achieved easily.

Specific structure and arrangement in implementing the present invention may be designed in any manner as long as an object of the present invention can be achieved.

### [Advantages of Embodiments]

As mentioned above, in the above-mentioned embodiment, when the processor 360 of the car audio 100 obtains, for example, a push-down signal Sou corresponding to the push-down operation from the input section 220 at the equipment control member 364, the processor 360 generates operation control signal Scs for making the equipment 310 work by a function corresponding to the push-down operation based on equipment setting information to output. When the fingerprint detecting section 230 detects a fingerprint, the processor 360 generates a fingerprint signal Syu corresponding to this fingerprint to output. When the processor 360 obtains the fingerprint signal Syu, the operation function setting member 363 generates function setting information in which a function corresponding to the push-down operation of the input section 220 is set to a function associated with the fingerprint.

Therefore, at the car audio 100, a function corresponding to, for example, push-down operation is set to a function associated with a fingerprint of each finger properly, and by the detection of fingerprints of each finger of, for example, the left hand, the functions can be set to five kinds of functions at maximum properly. Consequently, in case that, for example, fifteen kinds of processes are desired to be executed by the car audio 100, it is only required to provide one input section 220 being capable of executing three kinds of input operation, and it is not required to provide fifteen input members being capable of executing one input operation. Therefore, a plurality of processes can be executed easily.

## Claims

1. An operation control apparatus, comprising:
a biological characteristic signal output member that recognizes a biological characteristic of a human body to be utilized for an input operation and outputs a biological characteristic signal corresponding to the biological characteristic; and
a process controller that controls a process executing member for executing various processes in accordance with the input operation,
wherein the process controller sets a process to be executed by the process executing member based on the biological characteristic signal and the input operation.

2. The operation control apparatus according to claim 1, further comprising:
a storage that stores biological characteristic identification information associated with the biological characteristic signal and process identification information related to a process corresponding to the input operation such that the biological characteristic identification information and the process identification information are associated with each other,
wherein the process controller sets a process to be executed by the process executing member based on the process identification information obtained from the storage.

3. The operation control apparatus according to claim 2, further comprising:
an information generator that makes a notifying member for notifying various information notify at least one of the process identification information when the biological characteristic signal is obtained, and when the process identification information has been selected, makes the storage store the biological characteristic identification information associated with the biological characteristic signal and the selected process identification information such that the biological characteristic identification information and the selected process identification information are associated with each other.

4. The operation control apparatus according to any of claims 1 through 3, wherein the process controller makes the notifying member for notifying various information notify the contents of the set process, when the process executing member set a process to be executed.

5. The operation control apparatus according to claim 4, wherein the notifying member notifies the contents of the process set by a sound.

6. The operation control apparatus according to any of claims 1 through 5, further comprising:
a timer that counts the elapsed time from the time when the process executing member has set the process to be executed,
wherein the process controller changes the process to be processed by the process executing member to a predetermined process, in case that the elapsed time exceeds a predetermined time.

7. The operation control apparatus according to claim 6, wherein the predetermined process is a process executed with high frequency.

8. The operation control apparatus according to any of claims 1 through 7, further comprising: an input member including an operation section allowing the input operation to be executed and
an operation signal generating section that outputs an operation signal corresponding to the input operation at the operation section,
wherein the process executing member obtains the operation signal and recognizes the input operation.

9. The operation control apparatus according to claim 8, wherein the operation section is able to execute a plurality of input operations.

10. The operation control apparatus according to claim 8 or 9, wherein the biological characteristics signal output member is disposed at the operation section.

11. The operation control apparatus according to any of claims 1 through 10, wherein the biological characteristic is a fingerprint, and
wherein the biological characteristic signal output member comprises: a fingerprint abutment section on which the fingerprint abuts; and a biological characteristic signal generator that recognizes a kind of the fingerprint abutted on the fingerprint abutment section and outputs the biological characteristic signal corresponding to the kind of the recognized fingerprint.

12. The operation control apparatus according to claim 11, wherein the biological characteristic signal generator recognizes an abutment direction of the fingerprint having abutted on the fingerprint abutment section and outputs the biological characteristic signal corresponding to the recognized abutment direction.

13. The operation control apparatus according to claim 11 or 12, wherein the biological characteristic signal generator recognizes a moving direction of the fingerprint in a state being abutted on the fingerprint abutment section and outputs the biological characteristic signal corresponding to the recognized moving direction.

14. The operation control apparatus according to any of claims 11 through 13, wherein the biological characteristic signal generator recognizes an abutment position of the fingerprint on the fingerprint abutment section and outputs the biological characteristic signal corresponding to the recognized abutment position.

15. A process control apparatus, comprising:
a process executing member that executes various processes in accordance with an input operation; and
the operation control apparatus according to any of claims 1 through 14 that sets a process to be executed by the process executing member.

16. An operation control method, comprising the steps of:
recognizing a biological characteristic of a human body to be used in an input operation, and causing a biological characteristic signal corresponding to the biological characteristic to be output;
controlling a process executing member that executes various processes corresponding to the input operation; and
setting a process to be executed by the process executing member based on the biological characteristic signal and the input operation.

17. An operation control program that makes a computer function as the operation control apparatus according to any of claims 1 through 14.

18. An operation control program making a computer execute the operation control method according to claim 16.

19. A recording medium storing the operation control program according to claim 17 or 18 in a manner readable by a computer.
